(19)

Europäisches
Patentamt

European
Patent Office

Office européen
des brevets

(11)  **EP 4 787 291 A1**

(12)  **EUROPEAN PATENT APPLICATION**

(43) Date of publication:
**05.08.2026  Bulletin 2026/32**

(21) Application number: **25225175.6**

(22) Date of filing: **18.12.2025**

(51) International Patent Classification (IPC):
**G06T 5/60** (2024.01)        **G06T 5/70** (2024.01)

(52) Cooperative Patent Classification (CPC):
**G06T 5/60; G06T 5/70;** G06T 2207/20081;
G06T 2207/20084; G06T 2207/20182

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **04.02.2025  KR 20250013504
01.09.2025  KR 20250123201**

(71) Applicant: **SNUAILAB CO., Ltd.
Seoul 08826 (KR)**

(72) Inventors:
• **KIM, Chang Jin
16229 Gyeonggi-do (KR)**
• **LEE, Hyuk Jun
06974 Seoul (KR)**
• **YOO, Young Joon
07039 Seoul (KR)**

(74) Representative: **WSL Patentanwälte
Partnerschaft mbB
Kaiser-Friedrich-Ring 98
65185 Wiesbaden (DE)**

(54)  **METHOD OF GENERATING SYNTHETIC NOISY IMAGE AND SYSTEM PERFORMING THE
SAME**

(57)    A method of generating an image in which noise is synthesized by a self-noise synthesis system includes generating a diffusion noisy image by adding Gaussian noise to a noisy image, generating noise embedding by receiving a pair of the diffusion noisy image and a clean image as input, generating first guidance embedding by receiving a pair of a guidance noisy image and a guidance clean image as input, generating second guidance embedding by combining the first guidance embedding and time embedding, generating a prediction vector by receiving the noise embedding and the second guidance embedding as input, and generating a synthetic noisy image based on the prediction vector. A large quantity of noise datasets is generated by utilizing a small quantity of noise datasets.

FIG. 1

EP 4 787 291 A1

**Description**

BACKGROUND OF THE INVENTION

Field of the Invention

The present invention relates to a method of generating a synthetic noisy image to which synthetic noise close to real-world noise is added, and to a system for performing the same. Specifically, the present invention relates to a method of generating a clean-noisy image dataset serving as training data for training a neural network that removes noise from images, and to a system for performing the same.

Description of the Related Art

In research on removing noise from images, efforts are being made to reduce the cost of collecting actual data (a pair of a noisy image and a clean image). Mostly, studies have been conducted on a method of synthesizing realistic camera noise using metadata and a pair of a noisy image and a clean image.

Even though noise may be synthesized using metadata that includes information on capturing conditions such as camera type and ISO, there is a problem in that obtaining metadata, which varies depending on the environment in which the images are captured, is costly and time-consuming. Therefore, there is need for a method capable of generating a large amount of noise data from a pair of actual noisy and clean images without metadata.

[Patent Document] Korean Laid-Open Patent Publication No. 10-2024-0096401 (published on June 26, 2024)

SUMMARY OF THE INVENTION

It is an object of the present invention to provide a method of generating a synthesized noisy image using a pair of a noisy image and a clean image to generate a dataset of the synthesized noisy image and the clean image.

The problems to be solved by the present invention are not limited to the problems described above, and problems not mentioned herein may be clearly understood by a person having ordinary skill in the technical field to which the present invention pertains from this specification and the attached drawings.

In accordance with an aspect of the present invention, the above and other objects can be accomplished by the provision of a method of generating, by a self-noise synthesis system, an image in which noise is synthesized including generating a diffusion noisy image by adding Gaussian noise to a noisy image, generating noise embedding by receiving a pair of the diffusion noisy image and a clean image as input, generating first guidance embedding by receiving a pair of a guidance noisy image and a guidance clean image as input, generating second guidance embedding by combining the first guidance embedding and time embedding, generating a prediction vector by receiving the noise embedding and the second guidance embedding as input, and generating a synthetic noisy image based on the prediction vector.

In accordance with another aspect of the present invention, there is provided a self-noise synthesis system for generating an image in which noise is synthesized including a noisy image diffusion module configured to generate a diffusion noisy image by adding Gaussian noise to a noisy image, an encoder configured to output noise embedding by receiving a pair of the diffusion noisy image and a clean image as input, and to output first guidance embedding by receiving a pair of a guidance noisy image and a guidance clean image as input, a noise recognition guidance module configured to generate second guidance embedding by combining the first guidance embedding and time embedding, a decoder configured to generate a prediction vector by receiving the noise embedding and the second guidance embedding as input, and a noise synthesis module configured to generate a synthetic noisy image based on the prediction vector.

The solutions to the problems of the present invention are not limited to the solutions described above, and solutions that are not mentioned herein may be clearly understood by a person having ordinary skill in the art to which the present invention pertains from this specification and the attached drawings.

BRIEF DESCRIPTION OF THE DRAWINGS

The above and other objects, features and other advantages of the present invention will be more clearly understood from the following detailed description taken in conjunction with the accompanying drawings, in which:

FIGs. 1 to 3 are diagrams illustrating conceptual configurations based on a diffusion model of a self-noise synthesis system for generating an image in which noise is synthesized according to an embodiment of the present invention;
FIG. 4 is a block diagram briefly illustrating a configuration of the self-noise synthesis system according to an embodiment of the present invention;
FIG. 5 is a flowchart for describing a method of generating the image in which noise is synthesized according to an embodiment of the present invention;

FIG. 6 is a diagram illustrating a structure of the self-noise synthesis system according to an embodiment of the present invention;

FIG. 7 is a diagram illustrating a structure of blocks that perform skip-connection (Concat) according to an embodiment of the present invention; and

FIG. 8 is a diagram illustrating a structure of blocks that perform a decoding process according to an embodiment of the present invention.

DETAILED DESCRIPTION OF THE INVENTION

The above-described objects, features, and advantages of the present invention will become more apparent from the following detailed description given in conjunction with the accompanying drawings. However, the present invention may be modified in various ways and may have various embodiments, and specific embodiments will be illustrated in the drawings and described below.

Throughout the specification, identical reference numerals principally denote identical components. In addition, components having the same functions within the scope of the same concept appearing in the drawings of each embodiment are described using the same reference numerals, and redundant descriptions thereof will be omitted.

A detailed description of well-known functions or configurations related to the present invention will be omitted when it is determined that such a description may unnecessarily obscure the gist of the present invention. Further, numbers used in the description of the present specification (for example, first, second, etc.) are merely identifiers used to distinguish one component from another component.

In addition, the suffixes "module" and "unit" for components used in the embodiments below are assigned or interchangeably used only for ease of description, and the suffixes do not, by themselves, have distinct meanings or roles.

In the embodiments below, singular expressions include plural forms unless the context clearly indicates otherwise.

In the embodiments below, terms such as "include" or "have" indicate the presence of the features or components described in the specification, and do not preclude the possibility that one or more other features or components may be added.

In the drawings, the sizes of components may be exaggerated or reduced for convenience of description. For example, the size and thickness of each component shown in the drawings are arbitrarily illustrated for convenience of description and are not intended to limit the present invention to the depicted forms.

When an embodiment can be implemented otherwise, the order of a specific process may differ from the order described. For example, two processes described consecutively may be performed substantially simultaneously, or in reverse order.

In the embodiments below, when components are described as being interconnected, this includes not only the case where the components are directly interconnected, but also the case where other components are interposed therebetween so that the components are indirectly interconnected.

For example, when components are described as being electrically interconnected in the present specification, this includes not only the case where the components are directly electrically interconnected, but also the case where another component is interposed therebetween so that the components are indirectly electrically interconnected.

In the present specification, a pair of a clean image and a noisy image may be used as training data for training a neural network to remove noise from images, and may be images acquired through a camera. In addition, a synthetic noisy image may be an image in which noise is synthesized according to the present invention. For example, in the present specification, $x$ may be defined as a clean image, x as a noisy image, $\hat{x}$ as a synthesized noisy image, and $\hat{x}^*$ as a noise-removed image.

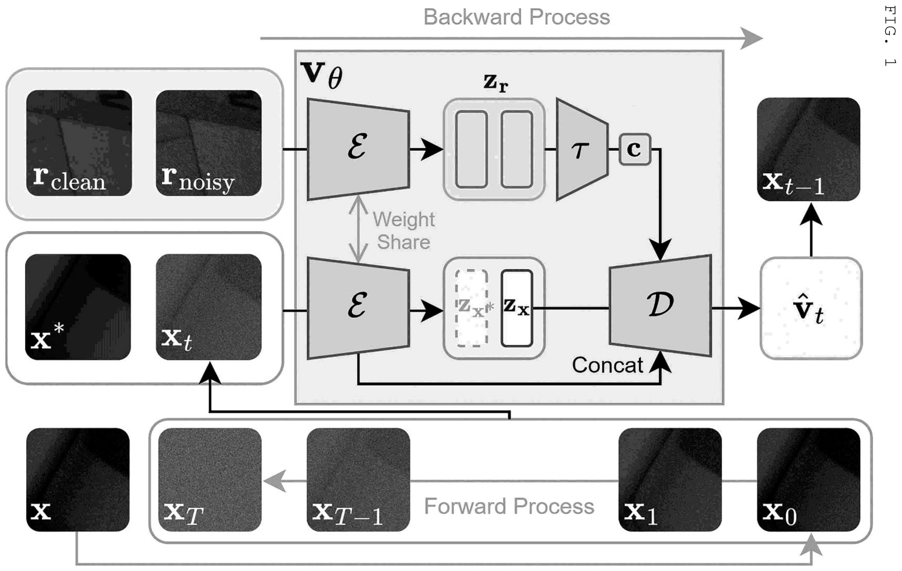

Hereinafter, a self-noise synthesis system of the present invention will be described with reference to FIGs. 1 to 8.

FIGs. 1 to 3 are diagrams illustrating conceptual configurations based on a diffusion model of the self-noise synthesis system for generating an image in which noise is synthesized according to an embodiment of the present invention.

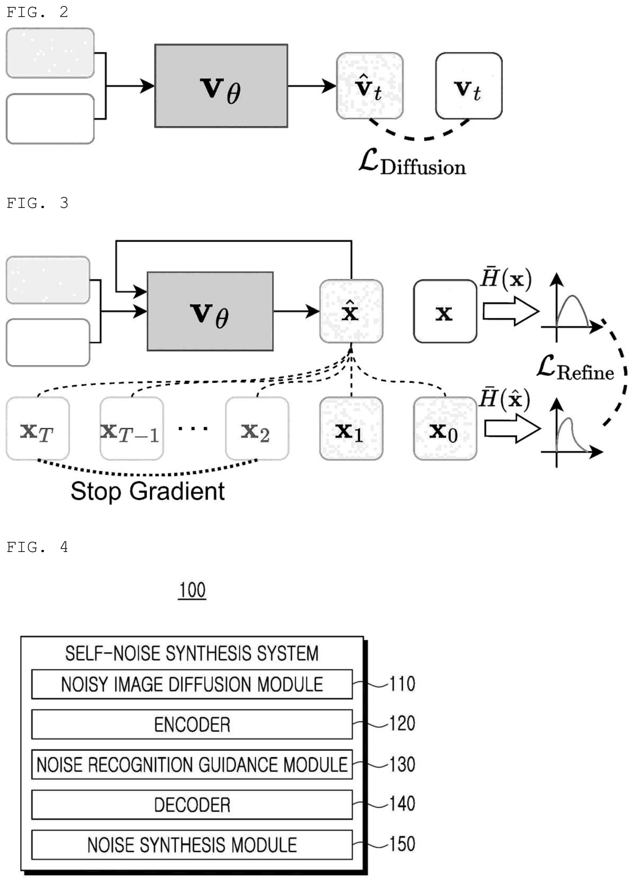

As shown in FIG. 1, the self-noise synthesis system 100 based on a diffusion model may include a forward process that gradually adds Gaussian noise to a noisy image and a backward process that predicts an added noise component. Specifically, the self-noise synthesis system 100 may gradually add noise to an image through a forward diffusion process and may learn a backward process for reconstructing an original image. In this instance, as shown in FIG. 2, the self-noise synthesis system 100 may be configured to predict the noise component so as to minimize a loss function. In addition, as shown in FIG. 3, the self-noise synthesis system 100 may be configured to improve similarity between a synthesized noisy image and an actual noisy image.

**[Diffusion Model]**

Specifically, for diffusion modeling, the self-noise synthesis system 100 may generate a diffusion noisy image by gradually adding a Gaussian noisy image to a noisy image based on DDPM (denoising diffusion probabilistic models). Here, the diffusion noisy image may be expressed as the following [Mathematical Expression 1].

[Mathematical Expression 1]

$$x_t = \sqrt{\alpha_t} x_0 + \sqrt{1 - \alpha_t} \epsilon, \text{ where } \epsilon \sim N(0, I$$

$\chi$: diffusion noisy image
$\epsilon$ : noise

Here, $\alpha_t$ may be a time-dependent coefficient that adjusts contribution between noise and a noisy image in the forward process.

To restore an original noisy image from a diffusion noise model, to which noise has been added in the backward process, the self-noise synthesis system 100 may be configured to directly predict a diffusion noise component added during the forward process. Specifically, the self-noise synthesis system 100 may add DDIM (denoising diffusion implicit models) and a prediction model to the DDPM. Here, the DDIM may provide a deterministic sampling strategy such as [Mathematical Expression 2].

[Mathematical Expression 2]

$$x_{t-1} = \sqrt{\alpha_{t-1}} \left( \frac{x_t - \sqrt{1 - \alpha_t} \epsilon_\theta(x_t, t)}{\sqrt{\alpha_t}} \right) + \sqrt{1 - \alpha_{t-1} - \sigma_t^2} \epsilon_\theta(x_t, t) + \sigma_t$$

Here, $\sigma_t$ may be a time-dependent coefficient that strikes a balance between deterministic sampling strategy and stochastic sampling.

The prediction model may control the backward process by predicting a prediction vector instead of directly predicting the noise $\epsilon$ in the forward process. Here, the prediction vector may be expressed as the following [Mathematical Expression 3].

[Mathematical Expression 3]

$$v_t = \sqrt{\sigma_t} \epsilon - \sqrt{1 - \alpha_t} x$$

$v_t$: prediction vector

The prediction model is trained to predict the prediction vector, and may be trained to minimize a loss function such as the following [Mathematical Formula 4].

[Mathematical Formula 4]

$$L_{\text{Diffusion}} = E[\| v_\theta(x_t, t) - v_t \|$$

In this instance, by replacing $\epsilon_\theta(x_t, t)$ of Mathematical Formula 2 with $v_\theta(x_t, t)$ of Mathematical Formula 4, a sampling step may be reduced and consistency may be increased, so that it is possible to improve prediction accuracy of the next step.

**[Self-Noise Synthesis Diffusion Model]**

The self-noise synthesis system 100 may generate a synthetic noisy image from a pair of a diffusion noisy image and a clean image and a pair of a guidance noisy image and a guidance clean image.

Conventional diffusion models place greater emphasis on content distribution rather than detailed noise distribution by using pixel-wise losses. Such an approach may be unable to fully account for complex noise distributions across an entire image. To address this issue, the self-noise synthesis system 100 may generate precise noise by using a refinement loss function.

Specifically, the self-noise synthesis system 100 may receive, as inputs to the backward process, the pair of the diffusion noisy image and the clean image and the pair of the guidance noisy image and the guidance clean image generated through the forward process based on a conditional U-Net model architecture of the DDPM. As illustrated in FIG. 1, the self-noise synthesis system 100 may have a cascaded decoding model architecture in which each input may intervene at different levels of the generation process. Accordingly, all inputs may be embedded in parallel using the same encoder. The encoder may include several encoder blocks, and each encoder block may compute a feature of the input diffusion noisy image based on a feature output from a previous block and time embedding of a time step. The self-noise synthesis system 100 may generate noise embeddings for the pair of the diffusion noisy image and the clean image. These processes may be expressed as the following [Mathematical Expression 5].

[Mathematical Expression 5]

$$\mathbf{f}_{\mathbf{x}_t, i} = \mathcal{E}_i(\mathbf{f}_{\mathbf{x}_t, i-1}, \mathbf{t}), \ \mathbf{f}_{\mathbf{x}_t, 0} = \mathbf{x}_t, \ 1 \leq i \leq N,$$

$$\mathbf{z}_{\mathbf{x}_t} = \mathbf{f}_{\mathbf{x}_t, N} := \mathcal{E}(\mathbf{x}_t, \mathbf{t}), \ \mathbf{F}_{\mathbf{x}_t} = \{\mathbf{f}_{\mathbf{x}_t, 1}, \mathbf{f}_{\mathbf{x}_t, 2}, \dots, \mathbf{f}_{\mathbf{x}_t, N}\}.$$

$f_{x_t, i}$: feature of input diffusion noisy image
t: time embedding
$\varepsilon_i$: encoder block
$F_{x_t}$: set of intermediate features
$Z_{x_t}$: noise embedding

The noise embedding may be used as an initial input to the decoder, and the feature of the clean image may guide generation of the prediction vector through concatenation.

The self-noise synthesis system 100 may embed the pair of the guidance noisy image and the guidance clean image to generate first guidance embedding. Then, the self-noise synthesis system 100 may input the first guidance embedding to a noise recognition guidance module to generate second guidance embedding. Here, the second guidance embedding may be expressed as the following [Mathematical Expression 6].

[Mathematical Expression 6]

$$\mathbf{c} = \tau(\mathbf{z_r}, \mathbf{t}), \ \mathbf{z_r} = \text{concat}(\mathcal{E}(\mathbf{r}_{\text{noisy}}, t), \mathcal{E}(\mathbf{r}_{\text{clean}}, t)).$$

c: second guidance embedding
$z_r$: first guidance embedding
$\varepsilon$: encoder
$r_{noisy}$: guidance noisy image
$r_{clean}$: clean noisy image
$\tau$: noise recognition guidance module

In this instance, since the second guidance embedding, which is generated by combining the first guidance embedding and the time embedding, is used as input to the decoder, the prediction model may prevent the direct use of guidance image features in a decoding process. Instead, the prediction model may be trained to focus on capturing features of the noise distribution. Specifically, by using a multilayer perceptron (MLP) to deliver the second guidance embedding to a decoder block, the decoding process may be expressed as in the following [Mathematical Expression 7].

[Mathematical Expression 7]

$$\alpha_i, \ \beta_i = \mathcal{M}_i(\mathbf{c}, \mathbf{t}),$$

$$\mathbf{g}_{i,j} = (1 + \alpha_i)\mathcal{D}_{i,j}(\text{concat}(\mathbf{g}_{i,j-1}, \mathbf{f}_{\mathbf{x}_t, i}, \mathbf{f}_{\mathbf{x}^*, i})) + \beta_i,$$

$$1 \leq j \leq L - 1, 1 \leq i \leq N,$$

$$\mathbf{g}_{i,L} = \mathcal{D}_{i,L}(\mathbf{g}_{i-1,L}, \mathbf{f}_{\mathbf{x}_t, i-1}, \mathbf{f}_{\mathbf{x}^*, i-1}, \mathbf{c}, \mathbf{t}),$$

$M_i(c,t)$: MLP
$D(i,j)$: jth layer of ith decoder block
$D_i$: ith decoder block
$g(1,0)$: noise embedding
$g_{i\geq2,0} = g_{i-1}$,

According to Mathematical Expression 7, $g_{i\geq2,0} = g_{i-1}$, may be output of a final decoder. When the backward process is processed by the prediction model $v_\theta(\cdot)$ as in Mathematical Expression 4, $g_{(N,L)}$ for the input diffusion noisy image may be expressed as the following [Mathematical Expression 8].

[Mathematical Expression 8]

$$\hat{\mathbf{v}}_t = \mathbf{v}_\theta(\mathbf{x}_t, \mathbf{x}^*, \mathbf{r}_{\text{noisy}}, \mathbf{r}_{\text{clean}}, t)$$
$$= \mathcal{D}(\mathbf{z}_{\mathbf{x}_t}, \mathbf{F}_{\mathbf{x}_t}, \mathbf{F}_{\mathbf{x}^*}, \mathbf{c}, t).$$

Furthermore, the prediction model may calculate $x_{t-1}$ by replacing the noise with the prediction vector according to Mathematical Expression 2. The self-noise synthesis system 100 may be optimized to minimize the loss function of Mathematical Expression 4, as shown in FIG. 2. In this case, the prediction vector of Mathematical Expression 4 may be replaced with the prediction vector of Mathematical Expression 8. Accordingly, in the self-noise synthesis system 100 of the present invention, a clean image, a guidance noisy image, and a guidance clean image may be newly introduced to generate a noise synthesis image.

In addition, as shown in FIG. 3, the self-noise synthesis system 100 may refine a result of the backward process using the refinement loss function. Specifically, during a sampling process from T to step 0, the self-noise synthesis system 100 may track a gradient for a last step $T_{split}$. The refinement loss function may improve similarity in histogram between the synthetic noisy image and the actual noisy image. The self-noise synthesis system 100 may induce a distribution of the synthetic noisy image to match a distribution of the actual noisy image using KLD (Kullback-Leibler Divergence) $D_{KL}$ and a differentiable histogram $\bar{H}$. Here, the refinement loss function may be expressed as the following [Mathematical Expression 9].

[Mathematical Expression 9]

$$\mathcal{L}_{\text{refine}} = D_{\text{KL}}(\bar{H}(\hat{\mathbf{x}}) \parallel \bar{H}(\mathbf{x})) + \gamma \mathbb{E}\left[\|\hat{\mathbf{x}} - \mathbf{x}\|^2\right]$$

---

**Algorithm 1** Trainable Sampling for Refine Loss

---

**Input:** Total steps $T$, Split time step $t_{split}$, model $\mathbf{v}_\theta$, target noisy image $\mathbf{x}$, input clean image $\mathbf{x}^*$ and guidance $\mathbf{r}$

1: Initialize $\mathbf{x}_T \sim \mathcal{N}(0, I)$
    //Normal Sampling Phase (without Gradient Flow)
2: **for** $t = T$ to $T_{split}$ **do**
3:     Predict $\texttt{StopGradient}(\mathbf{v}_\theta(\mathbf{x}_t, \mathbf{x}^*, \mathbf{r}, t))$
4:     Update $\mathbf{x}_{t-1}$   $\triangleright$ DDIM update Eq. (3) and Eq. (4)
5: **end for**
    //Trainable Sampling Phase (with Gradient Flow)
6: **for** $t = T_{split}$ to 0 **do**
7:     Predict $\mathbf{v}_\theta(\mathbf{x}_t, \mathbf{x}^*, \mathbf{r}, t)$
8:     Update $\mathbf{x}_{t-1}$   $\triangleright$ DDIM update Eq. (3) and Eq. (4)
9: **end for**
10: **Return** $\mathcal{L}_{\text{refine}}(\mathbf{x}_0, \mathbf{x})$

---

$\bar{H}(\hat{x})$: differentiable histogram of synthetic noisy image

$\overline{H}(x)$: differentiable histogram of noisy image

$\gamma$: weight of regularization term

By combining the loss function of Mathematical Expression 4 with the refinement loss function of Mathematical Expression 9, the overall loss function may be expressed as the following [Mathematical Expression 10].

[Mathematical Expression 10]

$$L = L_{\text{Diffusion}} + \lambda L_{\text{Refin}}$$

$\lambda$: contribution weight of refinement loss function

FIG. 4 is a block diagram briefly illustrating a configuration of the self-noise synthesis system according to an embodiment of the present invention.

Referring to FIG. 4, the self-noise synthesis system 100 may include a noisy image diffusion module 110, an encoder 120, a noise recognition guidance module 130, a decoder 140, and a noise synthesis module 150.

The noisy image diffusion module 110 may generate diffusion noisy images by adding Gaussian noise to a noisy image. Specifically, the noisy image diffusion module 110 may generate a diffusion noisy image by progressively adding Gaussian noise to the noisy image based on the DDPM. The diffusion noisy image may include a first diffusion noisy image to a Tth diffusion noisy image.

The encoder 120 may generate noise embedding by receiving a pair of a diffusion noisy image and a clean image as input. In this case, the diffusion noisy image may be one diffusion noisy image in reverse order from the Tth diffusion noisy image to the first diffusion noisy image.

The encoder 120 may generate a first guidance embedding by receiving a pair of a guidance noisy image and a guidance clean image as input. The encoder 120 may perform, in parallel, embedding for the pair of the diffusion noisy image and the clean image and embedding for the pair of the guidance noisy image and the guidance clean image. Specifically, the encoder 120 may include a plurality of encoder blocks, and each encoder block may compute a feature of an input image from a feature output from a previous block and time embedding.

The noise recognition guidance module 130 may output second guidance embedding by combining the first guidance embedding with time embedding. The second guidance embedding is used as input to the decoder 140. Since the first guidance embedding is combined with the time embedding and used as input to the decoder 140, the feature of the guidance noisy image may be prevented from being directly used in the decoding process.

The decoder 140 may generate a prediction vector by receiving the noise embedding and the second guidance embedding as input. Specifically, the decoder 140 may generate a prediction vector for the noise embedding based on the MLP for delivering the second guidance embedding at time t to an ith decoding block.

The noise synthesis module 150 may generate a synthetic noisy image based on the prediction vector. Specifically, the noise synthesis module 150 may be trained to predict the prediction vector and may correct the prediction vector to minimize a diffusion loss function. Further, the noise synthesis module 150 may generate a synthetic noisy image based on the corrected prediction vector. In addition, the noise synthesis module 150 may correct the synthetic noisy image based on a histogram of the synthetic noisy image and a histogram of the noisy image. Accordingly, the noise synthesis module 150 may induce a distribution of the synthetic noisy image to closely match a distribution of the actual noisy image, thereby improving accuracy of the backward process.

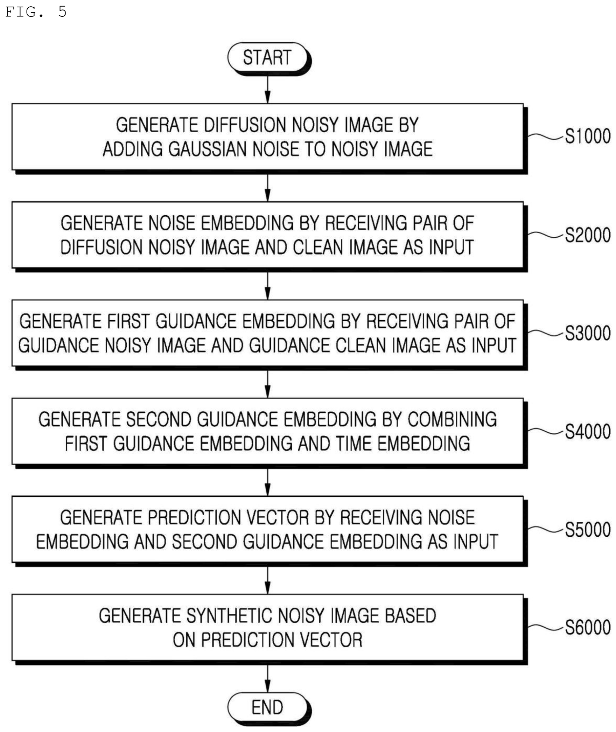

FIG. 5 is a flowchart for describing a method of generating the image in which noise is synthesized according to an embodiment of the present invention. Referring to FIG. 5, the operations in FIG. 5 are not limited to the illustrated order, and an additional operation may be performed between two adjacent operations. In addition, at least some of the operations of FIG. 5 may be omitted. In the present invention, an expression that the self-noise synthesis system 100 performs a specific operation may mean that components of the self-noise synthesis system 100 perform the specific operation or other hardware is controlled to perform the specific operation.

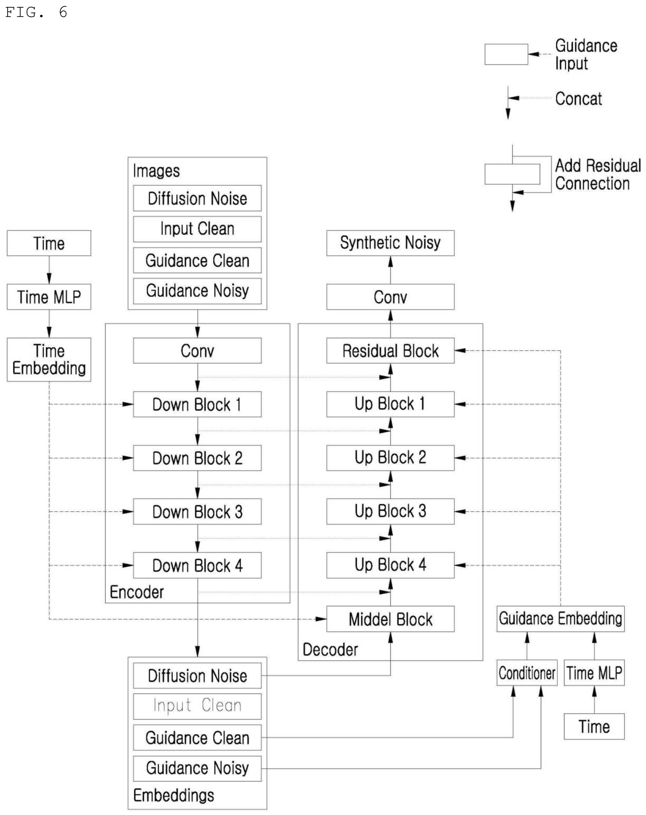

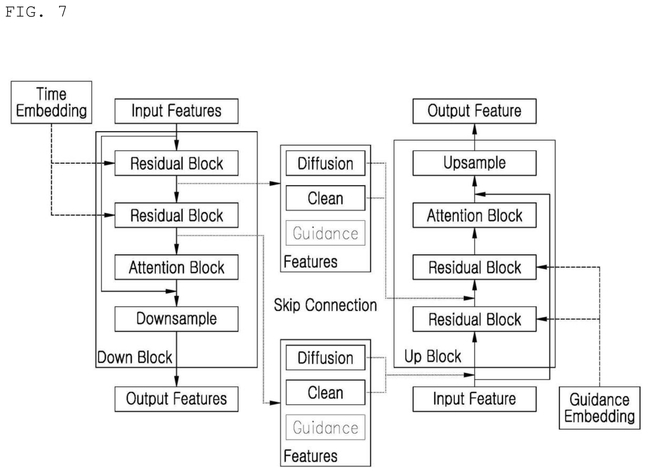

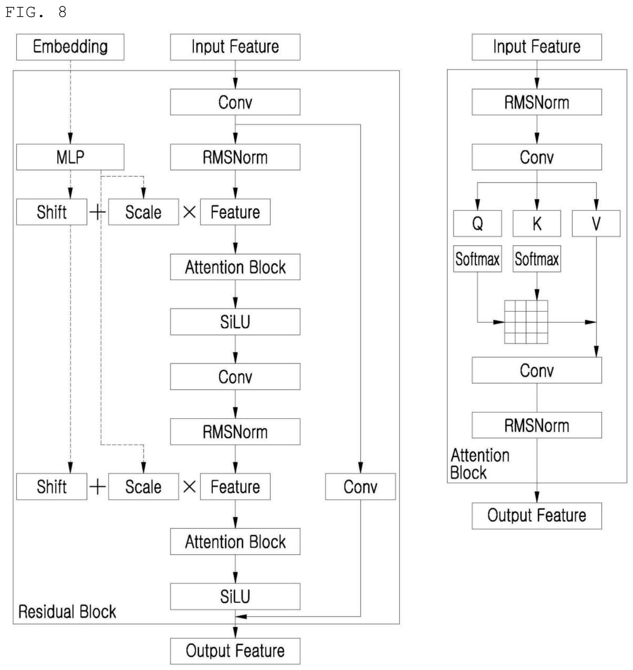

FIG. 5 will be described in more detail with reference to FIGs. 6 to 8. FIG. 6 is a diagram illustrating a structure of the self-noise synthesis system according to an embodiment of the present invention. FIG. 7 is a diagram illustrating a structure of a block that performs skip-connection (Concat) according to an embodiment of the present invention. FIG. 8 is a diagram illustrating a structure of a block that performs a decoding process according to an embodiment of the present invention.

Referring to FIG. 5, the self-noise synthesis system 100 may generate a diffusion noisy image by adding Gaussian noise to a noisy image (S1000). The self-noise synthesis system 100 may generates diffusion noisy images by adding Gaussian noise to noisy images. Specifically, the self-noise synthesis system 100 may may generate a diffusion noisy image by gradually adding Gaussian noise to the noisy image based on the DDPM. The diffusion noisy image may include a first diffusion noisy image to a Tth diffusion noisy image.

The self-noise synthesis system 100 may generate noise embedding by receiving a pair of the diffusion noisy image and the clean image as input (S2000). In this instance, the diffusion noisy image may be one diffusion noisy image in reverse order from the Tth diffusion noisy image to the first diffusion noisy image. For example, the noise embedding may be generated in the encoder of FIG. 6.

The self-noise synthesis system 100 may generate first guidance embedding by receiving a pair of a guidance noisy image and a guidance clean image as input (S3000). The self-noise synthesis system 100 may perform, in parallel, embedding for the pair of the diffusion noisy image and the clean image and embedding for the pair of the guidance noisy image and the guidance clean image. Specifically, the self-noise synthesis system 100 may include a plurality of encoder blocks, and each encoder block may compute a feature of an input image from a feature output from a previous block and time embedding. For example, the first guidance embedding may be generated in the encoder of FIG. 6.

The self-noise synthesis system 100 may generate second guidance embedding by combining the first guidance embedding and the time embedding (S4000). Since the first guidance embedding is combined with the time embedding and used as input to the decoder, the feature of the guidance noisy image may be prevented from being directly used in the decoding process. For example, the second guidance embedding may be generated in a conditioner of FIG. 6.

The self-noise synthesis system 100 may generate a prediction vector by receiving the noise embedding and the second guidance embedding as input (S5000). Specifically, the self-noise synthesis system 100 may generate a prediction vector for the noise embedding based on the MLP for delivering the second guidance embedding at time t to an ith decoding block. In addition, the self-noise synthesis system 100 may deliver features of the clean image to the decoder through concatenation, and this process may be performed in FIG. 7.

The self-noise synthesis system 100 may generate a synthetic noisy image based on the prediction vector (S6000). Specifically, the self-noise synthesis system 100 may be trained to predict the prediction vector. For example, an operation of predicting the prediction vector may be performed in a residual block of FIG. 8.

In addition, the self-noise synthesis system 100 may correct the prediction vector to minimize a diffusion loss function. Further, the self-noise synthesis system 100 may generate a synthetic noisy image based on the corrected prediction vector. In addition, the self-noise synthesis system 100 may correct the synthetic noisy image based on a histogram of the synthetic noisy image and a histogram of the noisy image. Accordingly, the self-noise synthesis system 100 may induce a distribution of the synthetic noisy image to closely match a distribution of the actual noisy image, thereby improving accuracy of the backward process.

According to an embodiment of the present invention, a synthesized noisy image may be generated using a pair of a noisy image and a clean image, and a dataset of the synthesized noisy image and the clean image may be generated.

In addition, according to an embodiment of the present invention, a synthesized noisy image may be generated from a pair of a noisy image and a clean image without metadata.

The features, structures, effects, etc. described in the embodiments above are included in at least one embodiment of the present invention and are not necessarily limited to only one embodiment. Moreover, the features, structures, effects, etc. illustrated in each embodiment may be combined or modified and implemented by those skilled in the art for other embodiments. Therefore, the content related to such combinations and modifications should be interpreted as being within the scope of the present invention.

Even though the embodiments have been described above, these embodiments are merely examples and do not limit the present invention. Those skilled in the art to which the present invention pertains will appreciate that various modifications and applications not illustrated above are possible without departing from the essential characteristics of the present embodiment. That is, each component specifically illustrated in the embodiments may be implemented in a modified manner. Further, differences related to such modifications and applications should be interpreted as being within the scope of the present invention defined in the appended claims.

**Claims**

1. A method of generating a synthetic noisy image, a self-noise synthesis system generating an image in which noise is synthesized, the method comprising:

    generating a diffusion noisy image by adding Gaussian noise to a noisy image;
    generating noise embedding by receiving a pair of the diffusion noisy image and a clean image as input;
    generating first guidance embedding by receiving a pair of a guidance noisy image and a guidance clean image as input;
    generating second guidance embedding by combining the first guidance embedding and time embedding;
    generating a prediction vector by receiving the noise embedding and the second guidance embedding as input; and
    generating a synthetic noisy image based on the prediction vector.

2. The method according to claim 1, wherein the generating a diffusion noisy image comprises generating the diffusion noisy image by gradually adding Gaussian noise to the noisy image.

3. The method according to claim 1, wherein the generating second guidance embedding comprises generating the second guidance embedding by inputting the first guidance embedding to a noise recognition guidance module and combining the first guidance embedding with the time embedding.

4. The method according to claim 1, further comprising training a deep learning model to correct the prediction vector to minimize a diffusion loss function.

5. The method according to claim 4, wherein the generating a synthetic noisy image comprises generating the synthetic noisy image based on the prediction vector corrected by the trained deep learning model.

6. The method according to claim 5, wherein the generating a synthetic noisy image comprises correcting the synthetic noisy image based on a histogram of the synthetic noisy image and a histogram of the noisy image.

7. A computer-readable recording medium storing a program for causing a computer to execute the method according to any one of claims 1 to 6.

8. A self-noise synthesis system for generating an image in which noise is synthesized, the self-noise synthesis system comprising:

   a noisy image diffusion module configured to generate a diffusion noisy image by adding Gaussian noise to a noisy image;
   an encoder configured to output noise embedding by receiving a pair of the diffusion noisy image and a clean image as input, and to output first guidance embedding by receiving a pair of a guidance noisy image and a guidance clean image as input;
   a noise recognition guidance module configured to generate second guidance embedding by combining the first guidance embedding and time embedding;
   a decoder configured to generate a prediction vector by receiving the noise embedding and the second guidance embedding as input; and
   a noise synthesis module configured to generate a synthetic noisy image based on the prediction vector.

9. The self-noise synthesis system according to claim 8, wherein the noisy image diffusion module generates the diffusion noisy image by gradually adding Gaussian noise to the noisy image based on DDPM (denoising diffusion probabilistic models).

10. The self-noise synthesis system according to claim 8, wherein the noise recognition guidance module generates the second guidance embedding by inputting the first guidance embedding to the noise recognition guidance module and combining the first guidance embedding with the time embedding.

FIG. 1

FIG. 2

$$\mathcal{L}_{\text{Diffusion}}$$

FIG. 3

Stop Gradient

FIG. 4

100

| SELF-NOISE SYNTHESIS SYSTEM | |
|---|---|
| NOISY IMAGE DIFFUSION MODULE | ～110 |
| ENCODER | ～120 |
| NOISE RECOGNITION GUIDANCE MODULE | ～130 |
| DECODER | ～140 |
| NOISE SYNTHESIS MODULE | ～150 |

FIG. 5

```
                    ┌─────────┐
                    │  START  │
                    └────┬────┘
                         ↓
┌──────────────────────────────────────────────┐
│     GENERATE DIFFUSION NOISY IMAGE BY          │ ～ S1000
│   ADDING GAUSSIAN NOISE TO NOISY IMAGE         │
└───────────────────────┬──────────────────────┘
                         ↓
┌──────────────────────────────────────────────┐
│  GENERATE NOISE EMBEDDING BY RECEIVING PAIR OF │ ～ S2000
│  DIFFUSION NOISY IMAGE AND CLEAN IMAGE AS INPUT│
└───────────────────────┬──────────────────────┘
                         ↓
┌──────────────────────────────────────────────┐
│ GENERATE FIRST GUIDANCE EMBEDDING BY RECEIVING │ ～ S3000
│    PAIR OF GUIDANCE NOISY IMAGE AND GUIDANCE    │
│           CLEAN IMAGE AS INPUT                  │
└───────────────────────┬──────────────────────┘
                         ↓
┌──────────────────────────────────────────────┐
│  GENERATE SECOND GUIDANCE EMBEDDING BY         │ ～ S4000
│  COMBINING FIRST GUIDANCE EMBEDDING AND        │
│           TIME EMBEDDING                        │
└───────────────────────┬──────────────────────┘
                         ↓
┌──────────────────────────────────────────────┐
│  GENERATE PREDICTION VECTOR BY RECEIVING NOISE │ ～ S5000
│  EMBEDDING AND SECOND GUIDANCE EMBEDDING AS    │
│                  INPUT                          │
└───────────────────────┬──────────────────────┘
                         ↓
┌──────────────────────────────────────────────┐
│    GENERATE SYNTHETIC NOISY IMAGE BASED        │ ～ S6000
│         ON PREDICTION VECTOR                    │
└───────────────────────┬──────────────────────┘
                         ↓
                    ┌─────────┐
                    │   END   │
                    └─────────┘
```

FIG. 6

FIG. 7

FIG. 8

# EUROPEAN SEARCH REPORT

Europäisches
Patentamt
European
Patent Office
Office européen
des brevets

**Application Number**

EP 25 22 5175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WU QI ET AL: "Realistic Noise Synthesis with Diffusion Models", PROCEEDINGS OF THE AAAI CONFERENCE ON ARTIFICIAL INTELLIGENCE, vol. 39, no. 8, 2 January 2025 (2025-01-02), pages 8432-8440, XP093383917, ISSN: 2159-5399, DOI: https://doi.org/10.48550/arXiv.2305.14022 * the whole document * | 1-10 | INV. G06T5/60 G06T5/70 |
| A | US 2024/265505 A1 (HAM CUSUH [US] ET AL) 8 August 2024 (2024-08-08) * the whole document * | 1-10 | |
| A | AU 2023 233 182 A1 (ADOBE INC [US]) 6 June 2024 (2024-06-06) * the whole document * | 1-10 | |

TECHNICAL FIELDS
SEARCHED (IPC)

G06T

The present search report has been drawn up for all claims

| Place of search | Date of completion of the search | Examiner |
|---|---|---|
| Munich | 1 April 2026 | Yilmaz, Özgün |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 5175

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2026

| Patent document cited in search report | Publication date | Patent family member(s) | | Publication date |
|---|---|---|---|---|
| US 2024265505 A1 | 08-08-2024 | NONE | | |
| AU 2023233182 A1 | 06-06-2024 | AU 2023233182 A1 | | 06-06-2024 |
| | | CN 118071646 A | | 24-05-2024 |
| | | DE 102023125635 A1 | | 23-05-2024 |
| | | GB 2624754 A | | 29-05-2024 |
| | | US 2024169500 A1 | | 23-05-2024 |

EPO FORM P0459

For more details about this annex : see Official Journal of the European Patent Office, No. 12/82

**EP 4 787 291 A1**

**REFERENCES CITED IN THE DESCRIPTION**

**Patent documents cited in the description**

- KR 1020240096401